(19) Europäisches Patentamt

European Patent Office

Office européen des brevets

(11) **EP 0 787 281 B1**

(12) **EUROPÄISCHE PATENTSCHRIFT**

(45) Veröffentlichungstag und Bekanntmachung des Hinweises auf die Patenterteilung:
**18.12.2002 Patentblatt 2002/51**

(21) Anmeldenummer: **96930062.3**

(22) Anmeldetag: **21.08.1996**

(51) Int Cl.⁷: **G01F 1/66**

(86) Internationale Anmeldenummer:
**PCT/EP96/03670**

(87) Internationale Veröffentlichungsnummer:
**WO 97/008516 (06.03.1997 Gazette 1997/11)**

(54) **VOLUMENDURCHFLUSSMESSGERÄT**

VOLUMETRIC FLOW METER

DEBITMETRE

(84) Benannte Vertragsstaaten:
**CH DE GB LI NL**

(30) Priorität: **22.08.1995 DE 19530807**

(43) Veröffentlichungstag der Anmeldung:
**06.08.1997 Patentblatt 1997/32**

(73) Patentinhaber: **Krohne AG**
**4019 Basel (CH)**

(72) Erfinder:
• **HUJZER, Arie**
**NL-3363 BS Sliedrecht (NL)**
• **BOER, Andre, H.**
**NL-3363 XB Sliedrecht (NL)**

(74) Vertreter: **Patentanwälte**
**Gesthuysen, von Rohr, Weidener, Häckel**
**Postfach 10 13 54**
**45013 Essen (DE)**

(56) Entgegenhaltungen:
WO-A-92/00507          GB-A- 2 279 146
US-A- 4 373 401          US-A- 5 275 060
US-A- 5 280 728

• **PATENT ABSTRACTS OF JAPAN vol. 010, no. 271 (P-497), 16.September 1986 & JP,A,61 093914 (SUMITOMO METAL IND LTD), 12.Mai 1986,**

**Beschreibung**

Die Erfindung betrifft ein Verfahren zur Bestimmung des Volumendurchflusses von strömenden Medien mit Hilfe eines Volumendurchflußmeßgerätes, daß nach dem Laufzeitprinzip arbeitet, mit einem das strömende Medium führenden, von einer Rohrleitung gebildeten Leitungsmeßabschnitt, mit zwei unter einem bestimmten Winkel gegenüber der Längsachse des Leitungsmeßabschnittes angeordneten, Ultraschallsignale in das strömende Medium aussendenden und/oder aus dem strömenden Medium empfangenden Ultraschalltransducern und mit einer Steuer- und Auswerteschaltung, wobei die Ultraschalltransducer die Ultraschallsignale über wärmeisolierende Ultraschallwellenleiter in das strömende Medium einkoppeln, die Steuer- und Auswerteschaltung aus der Differenz zwischen der Gesamtlaufzeit der Ultraschallsignale zwischen den Ultraschalltransducern und der Summe der Laufzeiten der Ultraschallsignale in den Ultraschallwellenleitern den Volumendurchfluß bestimmt und durch die Steuer- und Auswerteschaltung aus der Laufzeit der Ultraschallsignale in den Ultraschallwellenleitern die Temperatur des strömenden Mediums ermittelt wird. Ein solches Verfahren ist aus der US 5,280,728 bekannt.

Da sich die bekannten Volumendurchflußmeßgeräte bei ihrem Einsatz im industriellen Bereich sehr gut bewährt haben, erschließen sich diesen Volumendurchflußmeßgeräten in neuerer Zeit vielfach weitere Einsatzfelder. Dabei spielen insbesondere Einsatzfelder eine Rolle, in welchen das strömende Medium deutlich erhöhte Temperaturen aufweist. Hier sei nur beispielhaft der Einsatz im Bereich der Ölförderung erwähnt. Da bei den bekannten Volumendurchflußmeßgeräten in der Regel Piezokristalle als grundlegendes Bauteil der Ultraschalltransducer eingesetzt werden, beschränken sich die Einsatzmöglichkeiten der bekannten Volumendurchflußmeßgeräte auf einen Temperaturbereich bis zu 120 °C, höchstens aber bis 150 °C. Bei höheren Temperaturen werden die regelmäßig eingesetzten Ultraschalltransducer störanfällig bzw. gänzlich funktionsuntauglich. Um diese Problematik zu vermeiden, werden die Ultraschallsignale über wärmeisolierende Ultraschallwellenleiter in das strömende Medium eingekoppelt. Damit wird gewährleistet, daß die in dem strömenden Medium herrschenden hohen bis sehr hohen Temperaturen die Ultraschalltransducer selbst nicht erreichen. Volumendurchflußmeßgeräte mit solchen wärmeisolierenden Ultraschallwellenleitern sind z. B. aus dem Abstract zur JP 61-93914 und der US 5,275,060 bekannt.

Der Erfindung liegt die Aufgabe zugrunde, bei dem eingangs angegebenen Verfahren eine weitere Verbesserung der Meßgenauigkeit zu erzielen.

Ausgehend von dem eingangs genannten Verfahren ist die zuvor aufgezeigte Aufgabe erfindungsgemäß dadurch gelöst, daß anhand der ermittelten Temperatur des strömenden Mediums die temperaturabhängige Änderung des Rohrleitungsdurchmessers des Leitungsmeßabschnitts ermittelt wird und das Ergebnis für den Volumendurchfluß in Abhängigkeit von der ermittelten Änderung des Rohrleitungsdurchmessers korrigiert wird.

Da die Laufzeit der Ultraschallsignale in den Ultraschallwellenleitern ein unmittelbares Maß für die Temperatur der Ultraschallwellenleiter ist, läßt sich aus der Laufzeit der Ultraschallsignale in den Ultraschallwellenleitern auch auf die Temperatur des strömenden Mediums zurückschließen. Die Temperatur des strömenden Mediums hat nun einen wesentlichen Einfluß auf die Meßgenauigkeit des Volumendurchflußmeßgerätes. In Abhängigkeit von der Temperatur ändert sich nämlich z.B. der Rohrleitungsdurchmesser des Leitungsmeßabschnitts. Da es sich im vorliegenden Fall um ein Volumendurchflußmeßgerät und nicht um ein Massendurchflußmeßgerät handelt, führt eine Vergrößerung des Durchmessers des Leitungsmeßabschnitts zu einer Verringerung der gemessenen Geschwindigkeit des strömenden Mediums, was ohne Korrektur wiederum zur Ausgabe eines zu niedrigen Wertes für den Volumendurchfluß führt. Durch den beschriebenen Effekt entsteht beispielsweise bei einer Erhöhung der Temperatur des strömenden Mediums von 240 °C auf 260 °C ohne Korrektur ein Fehler von ca. 1,5 %. Durch die beschriebene Korrektur läßt sich dieser Fehler auf 0,1 % senken.

Im einzelnen gibt es nun eine Vielzahl von Möglichkeiten, das erfindungsgemäße Verfahren zur Bestimmung des Volumendurchflusses nach dem Laufzeitprinzip mit Hilfe eines Volumendurchflußmeßgerätes auszugestalten und weiterzubilden. Dazu wird verwiesen auf die folgende detaillierte Beschreibung in Verbindung mit der Zeichnung. In der Zeichnung zeigen

Fig. 1    eine schematisierte Darstellung eines Volumendurchflußmeßgerätes für strömende Medien, das nach dem Laufzeitprinzip arbeitet,

Fig. 2    eine schematisierte Darstellung eines Volumendurchflußmeßgerätes für strömende Medien, das nach dem Laufzeitprinzip arbeitet,

Fig. 3    einen Schnitt durch einen Ultraschallwellenleiter,

Fig. 4    ein Diagramm, welches die Abhängigkeit der Temperatur des Ultraschalltransducers von der Temperatur des strömenden Mediums bei einem Volumendurchflußmeßgeräts darstellt,

Fig. 5    ein Diagramm, welches die Abhängigkeit der Laufzeiten eines Ultraschallsignals in einem Ultraschallwellenleiter von der betreffenden Temperatur darstellt, und

Fig. 6    ein Diagramm, welches die Abhängigkeit der Ausbreitungsgeschwindigkeit eines Ultraschallsignals in einem Ultraschallwellenleiter von der Temperatur des strömenden Mediums darstellt.

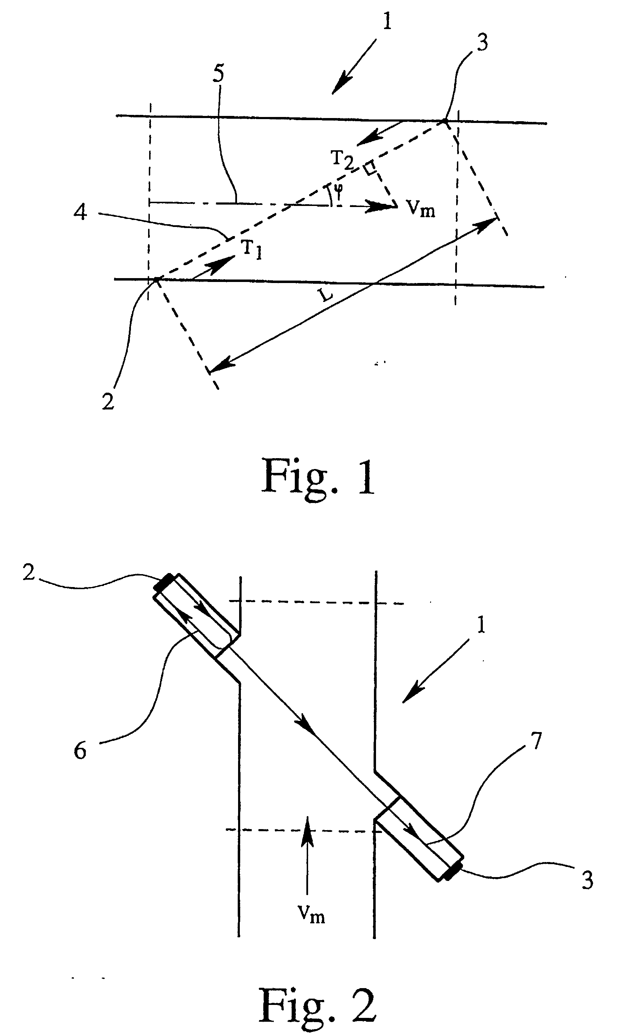

Fig. 1 zeigt ein Volumendurchflußmeßgerät für strömende Medien, das nach dem Laufzeitprinzip arbeitet. Das Volumendurchflußmeßgerät weist einen das strömende Medium führenden Leitungsmeßabschnitt 1 auf. An den gegenüberliegenden Enden des Leitungsmeßabschnitts 1 sind zwei Ultraschallsignale in das strömende Medium aussendende und/oder aus dem strömenden Medium empfangende Ultraschalltransducer 2, 3 angeordnet. In Fig. 1 nicht dargestellt ist eine Steuer- und Auswerteschaltung, die die Laufzeit der Ultraschallsignale zwischen den Ultraschalltransducern 2, 3 zur Bestimmung des Volumendurchflusses durch den Leitungsmeßabschnitt 1 mißt.

Der in Fig. 1 dargestellte Leitungsmeßabschnitt 1 stellt entweder einen selbständigen Teil innerhalb eines Leitungssystems dar oder er wird von einem Teil eines bestehenden Leitungssystems gebildet

Wie in Fig. 1 dargestellt, sind im allgemeinen Volumenmeßgeräte derart ausgestaltet, daß die die Verbindungslinie der Ultraschalltransducer 2, 3 bildende Meßlinie 4 die Längsachse 5 des Leitungsmeßabschnitts 1 unter einem Winkel φ schneidet. Unter besonderen Umständen, nämlich dann, wenn die Ultraschalltransducer 2, 3 in Krümmimgen des Leitungssystems auf der Längsachse 5 des Leitungsmeßabschnitts 1 angeordnet sind, beträgt der Winkel φ bis zu 0°.

Um ein intensives Ultraschallsignal am empfangenen Ultraschalltransducer 2, 3 zu gewährleisten, ist es sinnvoll, daß die Ultraschalltransducer 2, 3 aufeinander ausgerichtet sind.

Beide Ultraschalltransducer 2, 3 werden nun von der Steuer- und Auswerteschaltung derart gesteuert, daß jeweils ein Ultraschalltransducer 2, 3 Ultraschallsignale aussendet, die von dem jeweils anderen Ultraschalltransducer 3, 2 empfangen werden. Kennt man die Ausbreitungsgeschwindigkeit $c_o$ der Ultraschallsignale in dem strömenden Medium nicht, so ist es notwendig, daß die Ultraschalltransducer 2, 3 wechselweise als Sender und Empfänger angesteuert werden. Als Laufzeiten zwischen den Ultraschalltransducern 2, 3 ergeben sich somit

$$T_1 = \frac{L}{V_1} = \frac{L}{c_0 - V_m \cos \varphi} \qquad \text{Gl. 1}$$

$$T_2 = \frac{L}{V_2} = \frac{L}{c_0 + V_m \cos\varphi} \qquad \text{Gl. 2}$$

In diesen Gleichungen stellt L die Entfernung zwischen den beiden Ultraschalltransducern 2, 3 und $V_m$ die mittlere Geschwindigkeit des strömenden Mediums im Leitungsmeßabschnitt 1 dar. Durch die von Null verschiedene mittlere Geschwindigkeit $V_m$ des strömenden Mediums ist die Laufzeit $T_1$ des Ultraschallsignals vom Ultraschalltransducer 2 zum Ultraschalltransducer 3 geringer als umgekehrt die Laufzeit $T_2$ vom Ultraschalltransducer 3 zum Ultraschalltransducer 2.

Aus den Gleichungen 1 und 2 lassen sich nun bei bekannten Laufzeiten $T_1$ und $T_2$ die unbekannten Größen $c_o$ und $V_m$ bestimmen. Der gesuchte Volumendurchfluß durch den Leitungsmeßabschnitt 1 ergibt sich anschließend aus $V_m$ in Verbindung mit dem Querschnitt des Leitungsmeßabschnittes 1.

In Fig. 2 der Zeichnung ist nun ein Volumendurchflußmeßgerät mit Ultraschallwellenleitern dargestellt. Dieses Volumendurchflußmeßgerät unterscheidet sich von den zuvor beschriebenen dadurch, daß die Ultraschalltransducer 2, 3 nicht in immittelbarem Kontakt mit dem strömenden Medium angeordnet sind. In Fig. 2 ist schematisch dargestellt, daß die Ultraschalltransducer 2, 3 die Ultraschallsignale über wärmeisolierende Ultraschallwellenleiter 6, 7 in das strömende Medium einkoppeln. Aus der Zusammenschau von Fig. 1 und Fig. 2 in Verbindung mit den Gleichungen 1 und 2 ergibt sich die Notwendigkeit der Berücksichtigung der Laufzeiten der Ultraschallsignale in den Ultraschallwellenleitern 6, 7 vor der Bestimmung des Volumendurchflusses. In Fig. 2 der Zeichnung ist für den Ultraschallwellenleiter 6 auch angedeutet, daß ein Anteil der Ultraschallsignale an den dem strömenden Medium zugewandten Enden der Ultraschallwellenleiter 6, 7 reflektiert wird. Dieser Anteil kann durch spezielle Ausgestaltungen des Ultraschallwellenleiters 6, 7 verändert werden.

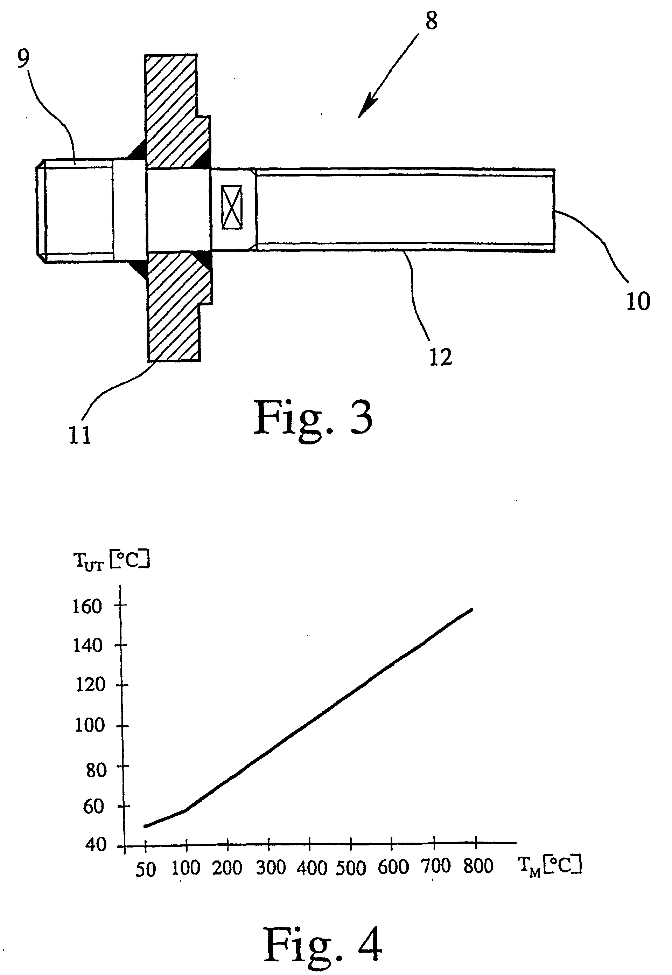

Fig. 3 zeigt nun einen Schnitt durch einen stabförmigen Ultraschallwellenleiter 8. Dieser stabförmige Ultraschallwellenleiter 8 steht an seinem ersten Ende 9 in Verbindung mit dem strömenden Medium und an seinem zweiten Ende 10 in Kontakt mit einem der Ultraschalltransducer 2, 3. Der Vorteil des dargestellten stabförmigen Ultraschallwellenleiters 8 ergibt sich aus den wärmeisolierenden Eigenschaften des zwischen dem zweiten Ende 10 und dem Montageflansch 11 angeordneten Isolationsabschnittes 12. Dieser Isolationsabschnitt 12 kann beispielsweise zusätzlich mit einer oder mehreren Kühlrippen versehen sein und besteht vorzugsweise aus rostfreiem Stahl, - jedoch ist beispielsweise auch Keramik oder Kunststoff als Ausgangsmaterial für den Ultraschallwellenleiter 8 denkbar.

In Fig. 4 der Zeichnung zeigt ein Diagramm die Abhängigkeit der Temperatur $T_{UT}$ eines der Ultraschalltransducer 2, 3 von der Temperatur $T_M$ des strömenden Mediums. Das in Fig. 4 dargestellte Diagramm wurde bei einer Umgebungstemperatur von 50 °C und einer Länge von 15 cm fiir den Isolationsabschnitt 12 aufgenommen. Man erkennt deutlich, daß ohne Beeinträchtigung oder Beschädigung eines der Ultraschalltransducer 2, 3 Temperaturen von bis zu 800 °C für das strömende Medium zulässig sind.

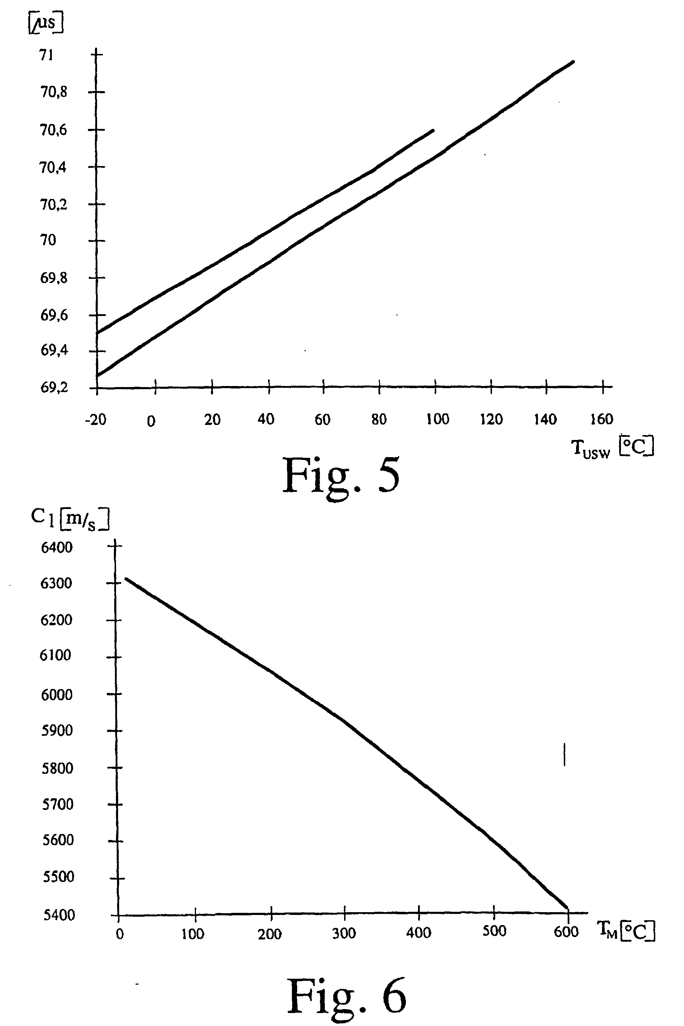

Die Abhängigkeit der Laufzeiten der Ultraschallsignale in den Ultraschallwellenleitern 6, 7 von der betreffenden Temperatur $T_{USW}$ der Ultraschallwellenleiter 6, 7 ist in Fig. 5 der Zeichnung dargestellt. Die obere Gerade zeigt die Abhängigkeit der Laufzeit der an den dem strömenden Medium zugewandten Enden der Ultraschallwellenleiter 6, 7 reflektierten Anteile der Ultraschallsignale von der Temperatur der Ultraschallwellenleiter 6, 7. Die untere Gerade in Fig. 5 zeigt die Abhängigkeit der Summe der Laufzeiten eines Ultraschallsignals in beiden Ultraschallwellenleitern 6, 7 abhängig von ihrer Temperatur. Aus Fig. 5 wird deutlich, daß sich anhand der Bestimmung der Laufzeit der Ultraschallsignale in den Ultraschallwellenleitern 6, 7 aus den an den dem strömenden Medium zugewandten Enden der Ultraschallwellenleiter 6, 7 reflektierten Anteilen der Ultraschallsignale eine sehr gute Korrektur der Summe der temperaturabhängigen Laufzeiten der Ultraschallsignale in den einzelnen Ultraschallwellenleitern 6, 7 vornehmen läßt.

Fig. 6 der Zeichnung zeigt schließlich die Abhängigkeit der Ausbreitungsgeschwindigkeit $c_1$ der Ultraschallsignale in den Ultraschallwellenleitern 6, 7 von der Temperatur $T_M$ des strömenden Mediums. Hier zeigt sich deutlich, daß die Temperatur des strömenden Mediums $T_M$ problemlos aus der Laufzeit der Ultraschallsignale in den Ultraschallwellenleitern 6, 7 bestimmbar ist und somit zur Korrektur des Wertes für den Volumendurchfluß heranziehbar ist. Diese Korrektur kann beispielsweise dadurch erfolgen, daß der aktuelle Durchmesser des Leitungsmeßabschnittes 1 aus einem bekannten Durchmesser des Leitungsmeßabschnittes 1 bei einer vorgegebenen Temperatur und der wie erläutert bestimmten Temperatur des strömenden Mediums anhand von Materialkonstanten des Materials des Leitungsmeßabschnittes 1 bestimmt wird.

**Patentansprüche**

1. Verfahren zur Bestimmung des Volumendurchflusses von strömenden Medien mit Hilfe eines Volumendurchflußmeßgerätes, das nach dem Laufzeitprinzip arbeitet, mit einem das strömende Medium führenden, von einer Rohrleitung gebildeten Leitungsmeßabschnitt, mit zwei unter einem bestimmten Winkel gegenüber der Längsachse des Leitungsmeßabschnittes angeordneten, Ultraschallsignale in das strömende Medium aussendenden und/oder aus dem strömenden Medium empfangenden Ultraschalltransducern und mit einer Steuer- und Auswertschaltung, wobei die Ultraschalltransducer die Ultraschallsignale über wärmeisolierende Ultraschallwellenleiter in das strömende Medium einkoppeln, die Steuer- und Auswerteschaltung aus der Differenz zwischen der Gesamtlaufzeit der Ultraschallsignale zwischen den Ultraschalltransducern und der Summe der Laufzeiten der Ultraschallsignale in den Ultraschallwellenleitern den Volumendurchfluß bestimmt und durch die Steuer- und Auswerteschaltung aus der Laufzeit der Ultraschallsignale in den Ultraschallwellenleitern die Temperatur des strömenden Mediums ermittelt wird, **dadurch gekennzeichnet, daß** anhand der ermittelten Temperatur des strömenden Mediums die temperaturabhängige Änderung des Rohrleitungsdurchmessers des Leitungsmeßabschnitts ermittelt wird und das Ergebnis für den Volumendurchfluß in Abhängigkeit von der ermittelten Änderung des Rohrleitungsdurchmessers korrigiert wird.

**Claims**

1. Method for determining the volume flow for flowing media with the use of a volume flow meter that works on the transit time principle, having a flow-carrying conduit measurement section formed from a pipeline, two ultrasonic transducers arranged at a certain angle to the longitudinal axis of the conduit measurement section that send ultrasonic signals into the flowing medium and/or receive them from the flowing medium and a control and evaluation circuit, wherein the ultrasonic transducers send ultrasonic signals via thermally insulating ultrasonic waveguides into the flowing medium, the control and evaluation circuit determines the volume flow based on the difference between the total transit time of the ultrasonic signals between the ultrasonic transducers and the sum of the transit times of the ultrasonic signals in the ultrasonic waveguides and the control and evaluations circuit determines the temperature of the flowing medium from the transit time of the ultrasonic signals in the ultrasonic waveguides **characterized in that** the temperature-dependent alteration of the pipeline diameter of the conduit measurement section is determined on the basis of the measured temperature of the flowing medium and the result is corrected for the volume flow in dependence on the determined alteration of the pipeline diameter.

**Revendications**

1. Procédé pour la détermination du débit volume de milieux qui s'écoulent à l'aide d'un appareil de mesure du débit volume qui travaille conformément au principe du temps de propagation, comprenant une section de mesure de canalisation formant une conduite rigide et guidant le milieu qui s'écoule, et comprenant deux transducteurs d'ultrasons disposés en formant un angle déterminé par rapport à l'axe longitudinal de la section de canalisation, émettant des signaux ultrasonores dans le milieu qui s'écoule et/ou recevant lesdits signaux à partir du milieu qui s'écoule et comprenant un circuit de commande et d'évaluation, dans lequel les transducteurs d'ultrasons alimentent les signaux ultrasonores dans le milieu qui s'écoule via des guides d'ondes ultrasonores calorifuges, le circuit de commande et d'évaluation déterminant le débit volume à partir de la différence entre le temps de propagation des signaux ultrasonores entre les transducteurs d'ultrasons et la somme des temps de propagation des signaux ultrasonores dans les guides d'ondes ultrasonores, la température du milieu qui s'écoule étant déterminée par le circuit de commande et d'évaluation à partir du temps de propagation des signaux ultrasonores dans les guides d'ondes ultrasonores, **caractérisé en ce que**, sur base de la température déterminée du milieu qui s'écoule, on détermine la modification du diamètre de la section de mesure de canalisation, qui dépend de la température et on corrige le résultat en ce qui concerne le débit volume en fonction de la modification déterminée du diamètre de la conduite rigide.

Fig. 1

Fig. 2

6

Fig. 3

Fig. 4

Fig. 5

Fig. 6